# EUROPÄISCHE PATENTSCHRIFT

(11) **EP 0 454 107 B1**
(45) Veröffentlichungstag und Bekanntmachung des Hinweises auf die Patenterteilung: **06.12.1995**
(21) Anmeldenummer: 91106661.1
(22) Anmeldetag: 25.04.1991
(51) Int. Cl.: G02B 6/28, G02B 6/38

(54) **Verfahren zur Herstellung eines optischen Kopplers für Polymerlichtwellenleiter**
Method for the production of an optical coupler for polymer light-guides
Méthode de fabrication d'un coupleur optique pour guides d'ondes lumineuses polymères

(30) Priorität: 26.04.1990 DE 4013307
(43) Veröffentlichungstag der Anmeldung: 30.10.1991
(73) Patentinhaber: HOECHST AKTIENGESELLSCHAFT, 65926 Frankfurt am Main (DE)
(72) Erfinder: Coutandin, Jochen, Dr., W-6536 Langenlonsheim (DE); Theis, Jürgen, Dr., W-6370 Oberursel (DE); Groh, Werner, Dr., W-6302 Lich (DE); Brockmeyer, Andreas, Dr., W-6237 Liederbach (DE)

(56) Entgegenhaltungen:
- EP-A- 0 250 151
- EP-A- 0 315 874
- WO-A-89/02608
- DE-A- 3 833 369
- PATENT ABSTRACTS OF JAPAN, Band 5, Nr. 126 (P-75), 14. August 1981 ; & JP-A-56 066 812

## Beschreibung

Die Erfindung bezieht sich auf ein ökonomisch günstiges Verfahren zur Herstellung von optischen Kopplern, die eine hohe mechanische Stabilität besitzen und sehr beständig gegenüber Temperatur- und Witterungseinflüssen sind.

In passiven Lichtwellenleiternetzen dienen Koppler als optische Bauelemente zum Aufteilen der Lichtsignale von ankommenden Lichtwellenleitern auf abgehende Lichtwellenleiter. Derartige Koppler bestehen aus einem transparenten Körper, welcher an der Lichteintritts- und an der Lichtaustrittsseite mit Lichtwellenleitern verbunden ist. Neben den Kopplern, die durch Zusammenkleben oder Zusammenschmelzen von transparenten Formkörpern mit Lichtwellenleitern entstehen, sind auch Koppler bekannt, zu deren Herstellung Lichtwellenleiterbündel verdrillt und an der Verdrillstelle verstreckt werden (vgl. Agarwal, Fiber Integr. Optics 6 (1) 27-53, 1987).

Die Herstellung derartiger zusammengesetzter Koppler ist jedoch aufwendig und teuer; hinzu kommt noch, daß die Durchgangsdämpfung solcher bekannten Koppler schwer reproduzierbar ist, so daß die Leistung zwischen den verschiedenen Ausgangsfasern um mehr als 1dB schwankt.

Weiterhin sind Koppler bekannt, hei denen Faserbündel aus Polymerlichtwellenleitern mittels eines Schrumpfschlauchs verschmolzen werden (EP-A-0 315 874, WO-89/02608). Bei dem Koppler gemäß EP-A-0 315 874 kann der Schrumpfschlauch aus einem inneren und einem äußeren Schrumpfschlauch bestehen, oder kann das Faserbündel vor dem Drüberschieben des Schrumpfschlauchs mit einem thermoplastischen Band um wickelt werden, wobei bei Erreichen der Schrumpftemperatur der innere Schlauch oder das Band bereits thermoplastisch sind.

Bei einem Verfahren gemäß der WO-89/02608 kommt es nur zu einem unvollständigen Kontakt zwischen den verschmolzenen Kernfasern, dem Schrumpfschlauch und einem sogenannten "Füllstab", so daß eine gestörte Kern-Mantel-Grenzschicht entsteht, die zu großen optischen Verlusten führt.

Ein weiteres großes Problem vieler Koppler z.B. des "Biconical-Taper"-Kopplers oder auch die Verbindung der Schrumpfschlauchtechnik mit dem "Biconical-Taper"-Verfahren, ist eine nur unzureichende mechanische Stabilität, insbesondere in der Umgebung des Mischbereichs, die nur durch unterstützende Maßnahmen verringert werden kann. Um den im Automobilbau geforderten Stabilitätsansprüchen gerecht zu werden, ist es bisher notwendig, die hergestellten Koppler in speziellen Gehäusen zu fixieren.

Die Aufgabe bestand nun darin, ein Verfahren zu finden, nach welchem man mechanisch stabile Koppler einfach und kostengünstig herstellen kann und welches Koppler mit niedrigen Ausgangsdämpfungen und geringen Schwankungen der Leistungen zwischen den Ausgangsfasern liefert.

Die Aufgabe wird durch ein Verfahren gemäß Anspruch 1 gelöst.

Bei diesem Verfahren sollte die Möglichkeit bestehen je nach Anwendungsgebiet entweder von fertigen Lichtwellenleitern auszugehen, die lediglich im Mischbereich von dem umgebenden Mantelmaterial befreit werden, oder aber auch kompakte Lichtwellenleiterbündel herzustellen bei denen eine Entfernung des Mantels entfallen kann.

Es wurde gefunden, daß man auf einfache Weise einen gegen äußere Einwirkungen stabilen Koppler, mit minimalen Schwankungen zwischen den einzelnen Ausgangsfasern dadurch herstellen kann, daß man die Lichtwellenleiter im Mischbereich mit einem Kunststoffröhrchen umgibt über welches in einem darauf folgenden Schritt ein Schrumpfschlauch aufgezogen wird.

Für das erfindungsgemäße Verfahren werden zwei bis 10⁵ Polymer Lichtwellenleiter gleichsinnig angeordnet und gebündelt, wobei die Lichtwellenleiter gegebenenfalls verdrillt sein können, über den Mischbereich ein Kunststoffröhrchen gestülpt und anschließend ein Stück Kunststoff-Schrumpfschlauch über das Röhrchen geschoben. Durch Erhitzen des Schlauches wird dieser zum schrumpfen und die Polymerlicht wellenleiter und das Kunststoffröhrchen zum schmelzen gebracht.

Durch das Kunststoffröhrchen wird die Stabilität des Mischbereichs verstärkt, so daß dieser gegenüber äußeren Einwirkungen, beispielsweise Schlag-, Stoß- oder Knickbelastungen, geschützt ist. Das Röhrchen darf nicht völlig steif sein, sondern muß bis zu einem gewissen Maße flexibel sein, sich also den Lichtwellenleitern im Mischbereich bei Biegung anpassen, diese aber vor einem Zerbrechen bewahren. Das Kunststoffröhrchen schützt den Mischbereich aber auch vor Temperatur- und Klimaeinflüssen, so daß derartige Koppler selbst nach hohen Temperaturbelastungen nur sehr geringe Dämpfungsabweichungen zeigten.

Geeignete Materialien für derartige Kunststoffröhrchen sind allgemein alle hochtransparenten Polymere, deren Brechungsindex kleiner ist als der Brechungsindex der Fasern, beispielsweise Polymethylmethacrylat (PMMA), Poly-4-methylpenten, Polytetrafluorethylen oder fluorierte Polymere.

Voraussetzung für ein erfolgreiches Verschmelzen ist die Abstimmung der mechanischen und thermodynamischen Eigenschaften von Lichtwellenleiter und Kunststoffröhrchen. Beim Erwärmen von Lichtwellenleiter und Kunststoffröhrchen gehen diese vom Glaszustand in einem thermoelastischen Zustand über. Dem thermoelastischen Zustand folgt ein thermoplastischer Zustand. Bei steigender Temperatur sollte zuerst das Kunststoffröhrchen in den thermoelastischen Zustand übergehen, während die Lichtwellenleiter erst bei einer höheren Temperatur diesen Übergang vollziehen. Bevor jedoch das Kunststoffröhrchen in den thermoplastischen Zustand übergeht, müßen die Lichtwellenleiter schon im thermoelastischen Zustand sein. Hierdurch kommt es zu einem guten optischen Kontakt von Kunststoffröhrchen und Lichtwellenleiter und gleichzeitig wird verhindert das Mantelmaterial zwischen die Leiter gelangt. Durch Veränderung des Molekulargewichtes von Lichtwellenleiter und Kunststoffröhrchen können die verschiedenen Temperaturbereiche aufeinander abgestimmt werden. Wenn die Schrumpftemperatur des Schrumpfschlauches innerhalb des thermoelastischen Temperaturbereiches des Kunststoffröhrchens liegt, tritt eine dichte Bündelung von Röhrchen und Leitern ein. Während des Verschmelzens kann das mit dem Schrumpfschlauch und Kunststoffröhrchen umgebene Faserbündel während oder nach dem Erhitzen symmetrisch oder asymmetrisch verstreckt werden, so daß sich ein doppeltkonisches Profil mit einer Taille in der Mitte (biconical taper) bildet. Dieses doppelt konische Profil kann auch ohne Verstrecken dadurch erreicht werden, daß man die Mitte des Schrumpfschlauches stärker erhitzt als die Enden.

Durch den Schrumpfvorgang des Schrumpfschlauches kommt es zur Deformation des Kunststoffröhrchens, wodurch das verschmolzene Polymerlichtwellenleiterbündel hermetisch dicht abgeschlossen wird.

Der Brechungsindex des Kunststoffröhrchens soll bei dem erfindungsgemäßen Verfahren kleiner sein als der Brechungsindex der Kernfaser, da dieses als optischer Mantel für den Mischbereich dient. In diesem Fall wird die Faser vor Aufziehen des Röhrchens im Mischbereich von dem ursprünglichen Mantelmaterial befreit.

Ein Vorteil dieses Verfahrens besteht darin, daß ein Entfernen des Schrumpfschlauchs und nachträgliches Lackieren des Mischbereichs unterbleiben kann, da das Kunststoffröhrchen die Funktion des optischen Mantels voll übernimmt.

Eine zusätzliche Reduzierung der Dämpfungsverluste kann beispielsweise dadurch erreicht werden, indem das Kunststoffröhrchen durch Bedampfung mit einem Metall, insbesondere Aluminium, verspiegelt wird, oder durch Umwickeln des nicht bedampften Röhrchens mit einer verspiegelten Kunststoffolie.

Das beschriebene Verfahren eignet sich aber auch zur Herstellung von kompakten Lichtwellenleiterbündeln, wozu eine vorherige Entfernung des optischen Mantels der Lichtwellenleiter nicht erforderlich ist.

Das Kunststoffröhrchen hat eine Länge von 10 bis 100 mm, vorzugsweise 40 bis 60 mm und einen Innendurchmesser von 1 bis 50 mm, vorzugsweise 3 bis 10 mm. Die Wandstärke beträgt in der bevorzugten Ausführungsform 0,5 bis 25 mm, insbesondere 1 bis 5 mm. Es ist darauf zu achten, daß die innere Oberfläche des Röhrchens möglichst glatt ist.

Schrumpfschläuche die sich für das erfindungsgemäße Verfahren eignen werden zum Beispiel in der DE-A-37 37 930 und der WO-89/02608 beschrieben.

Der Schrumpfschlauch kann schwarz, transparent oder farbig sein. Da der Schrumpfschlauch nicht als optischer Mantel dient, spielt der Brechungsindex des Schrumpfschlauches bei dieser Art der Fertigung keine Rolle. Es ist auch möglich, einen Schrumpfschlauch zu verwenden, dessen Innenwand mit einem thermoplastischen Kunststoff beschichtet ist. Der Schrumpfschlauch mit Innenbeschichtung besteht im allgemeinen aus einem Polyolefin.

Für das erfindungsgemäße Verfahren können auch Dualschrumpfschläuche verwendet werden. Diese Schläuche bestehen aus einem inneren und einem äußeren Schrumpfschlauch. Bei Erreichen der Schrumpftemperatur des äußeren Schlauches ist der innere Schlauch bereits thermoplastisch. Der Druck, den der äußere Schrumpfschlauch ausübt, reicht aus, um eine gute Verbindung zwischen Schrumpfschlauch, Kunststoffröhrchen und Fasern herzustellen.

Der Schrumpfschlauch besitzt normalerweise eine Länge von 10 bis 200 mm, vorzugsweise 50 bis 100 mm und hat einen Durchmesser von 0,5 bis 60 mm, insbesondere 1 bis 20 mm.

Die für Schrumpfschläuche gebräuchlichen Materialien, beispielsweise Polyolefine, Vinylidenfluorid oder Copolymere mit Vinylidenfluorid oder Silikonkautschuk, fangen im allgemeinen bei Temperaturen zwischen 100 und 300°C an zu schrumpfen, dabei verkleinert sich der Schlauch um ein Verhältnis von 1,2:1 bis zu etwa 4:1, was von der Art des Schrumpfschlauches abhängig ist.

Koppler bei denen sowohl Eingangs- als auch Ausgangsfasern in einer Richtung liegen, also der Koppelbereich U-förmig gebogen ist, werden beispielsweise in der Automobilindustrie gebraucht. Derartig gebogene Koppler sind besonders anfällig gegen äußere mechanische Einwirkungen in dem ohnehin schon belasteten Mischbereich. Durch das Kunststoffröhrchen erhalten solche speziell geformten Koppler gerade in diesem Bereich eine hohe Unterstützung, so daß sie gegen Schlag-, Druck- und Torsionsbelastungen besonders widerstandsfähig sind.

Zusammenfassend kann gesagt werden, daß sich durch das erfindungsgemäße Verfahren Koppler mit einer besonders hohen mechanischen Stabilität herstellen lassen. Durch das die Lichtwellenleiter umschließende Kunststoffröhrchen erhält die optische Faser einen besonders wirksamen Schutz gegen alle äußeren Einwirkungen, wie beispielsweise Öl, Staub oder Feuchtigkeit und weist außerdem eine sehr gute Beständigkeit gegen Temperatur- und Klimaeinflüsse auf.

### Beispiel 1

Herstellung eines 7 x 7-Sternkopplers mit Transmissionsmischer

Bei sieben 0,5 m Kunststofflichtwellenleitern aus Polycarbonat mit einem Durchmesser von jeweils 1 mm wurde in einem Bereich von 5 cm der optische Mantel mittels Benzin entfernt. Anschließend wurde über diesen Bereich ein dünnes PMMA-Röhrchen (n = 1,492) geschoben. Der Brechungsindex der Fasern betrug n = 1,585. Das PMMA-Röhrchen hatte einen Innnendurchmesser von 3 mm, eine Wandstärke von 1 mm und eine Länge von 5 cm. Danach wurde ein 7 cm langer transparenter Schrumpfschlauch aus Polyvinylidenfluorid mit einem Innendurchmesser von 6,4 mm über das PMMA-Röhrchen und die Fasern gestülpt.

Zur Trennung von Heizung und Schrumpfschlauch wurde über Schrumpfschlauch, PMMA-Röhrchen und Fasern ein 7,5 cm langes Glasröhrchen mit einem Innendurchmesser von 7 mm gezogen und die Fasern fixiert. Im Bereich des Schrumpfschlauches bzw. des PMMA-Röhrchens wurde die Temperatur auf 195°C erhöht. Beim Erreichen dieser Temperatur begann der Schrumpfschlauch zu schrumpfen und das PMMA-Röhrchen mit den Fasern, deren Erweichungstemperatur unterhalb von 195°C lag, zu verschmelzen. Der verschmolzene Bereich (Mischerstab genannt) hatte eine runde Form mit einer Länge 1 = 2,5 cm und einem Durchmesser d ≈ 3 mm. Da das PMMA-Röhrchen einen kleineren Brechungsindex besitzt als die Polycarbonatfasern (n = 1.585), wirkt das PMMA-Röhrchen neben seiner stabilisierenden Wirkung gleichzeitig als optischer Mantel. An der Grenzschicht Mischerstab/PMMA-Röhrchen wurde das in dem Mischer verlaufende Licht totalreflektiert, so daß fast kein Licht nach außen dringen konnte. Nach Entfernen des Glasröhrchens liegt ein mechanisch stabiler Sternkoppler vor.

Der Sternkoppler wurde auf seine Beständigkeit gegen cyclische Temperaturbelastung geprüft. Hierzu wurde der Koppler in einen Klimaschrank eingebaut und im 8 Stunden Cyclus eine Woche lang zwischen -40°C und + 100°C getempert. Die Dämpfungsänderung lag bei 0,5 dB.

Der 7 x 7-Sternkoppler mit dem Transmissionsmischer hatte einen Excessverlust von 2,0 dB mit einer Leistungsschwankung zwischen beliebigen Ausgangsfasern von 1,5 dB.

### Beispiel 2

Analog zu Beispiel 1 wurde ein Transmissionssternkoppler hergestellt. Der Mischerstab wurde mittels einer Heißluftquelle erneut auf 180°C erwärmt und U-förmig gebogen.

Der gemessene Excessverlust betrug 2,5 dB mit einer Leistungsschwankung zwischen beliebigen Ausgangsfasern von 2 dB.

Der Transmissionssternkoppler wurde unter den gleichen Bedingungen wie der Koppler aus Beispiel 1 auf seine Temperaturbeständigkeit geprüft. Auch hier waren die Dämpfungsänderungen nur gering: + 0,6 dB. Derartig hergestellte Koppler zeigten eine hohe Torsionsbelastbarkeit.

### Beispiel 3

Analog zu Beispiel 1 wurde ein 7 x 7 Sternkoppler hergestellt. Um geringere Dämpfungsverluste zu erhalten wurde, ein mit Aluminium bedampftes Polymethylmethacrylatröhrchen verwendet.

Der Transmissionssternkoppler mit einem verspiegelten Mischbereich hatte einen Excessverlust von 1,7 dB mit einer Leistungsschwankung zwischen den Ausgangsfasern von 1,5 dB.

Der Dämpfungsunterschied nach einer Temperaturbelastung, analog zu Beispiel 1 und Beispiel 2, betrug 0,6 dB.

### Beispiel 4

In ähnlicher Weise wie in Beispiel 1 wird ein (7 x 7) Sternkoppler auf der Basis von verstreckten PMMA-Fasern (PMMA: n = 1,492) hergestellt. Im Unterschied zu Beispiel 1 wird der optische Mantel mit einer Toluol-Aceton-Lösung (2:1) entfernt. Das Kunststoffröhrchen besteht aus einem Fluorpolymer mit einem Brechungsindex von n = 1,37. Die vorliegende Anordnung, bestehend aus den Fasern, dem Kunststoffröhrchen und dem Schrumpfschlauch wird so erwärmt, daß die Temperatur in der Mitte des Röhrchens ca. 190°C beträgt, während die Temperatur im Randbereich um ca. 10°C niedriger ist. Aufgrund dieser Temperaturführung kommt es zu einem axialem Schrumpf der verstreckten polymeren optischen Fasern. Da sich der mittlere Teil der verschmolzenen Fasern in einem thermoplastischem Zustand und der äußere Bereich in einem thermoelastischem Zustand befindet, kommt es zur Ausbildung einer bikonischen Form innerhalb des Kunststoffröhrchens. Das normalerweise auftretende radiale Quellen der Fasern im Randbereich wird durch die Schrumpfkraft des Schrumpfschlauches unterdrückt.

Der so hergestellte Transmissionssternkoppler zeigt mit 1,3 dB eine sehr niedrige Leistungsschwankung. Der Excessverlust liegt im Bereich von 1,5 dB.

Bei einer zyklischen Temperaturbelastung (von -40°C bis +85°C) betrug der Dämpfungsunterschied nur 0,5 dB.

## Patentansprüche

1. Verfahren zur Herstellung eines optischen Kopplers für Polymerlichtwellenleiter, bei dem zwei bis 10⁵ Polymerlichtwellenleiter gleichsinnig geordnet und gebündelt werden, über den herzustellenden Mischbereich ein Kunststoffröhrchen gestülpt wird, anschließend ein Stück Kunststoff-Schrumpfschlauch über das Kunststoffröhrchen geschoben wird und der Schrumpfschlauch bis auf eine Temperatur erhitzt wird, bei der er sich zusammenzieht und die Polymerlichtwellenleiter und das Kunststoffröhrchen schmelzen, wobei die Materialien der Polymerlichtwellenleiter und des Kunststoffröhrchens derart gewählt sind, daß bei steigender Temperatur das Kunststoffröhrchen vor den Polymerlichtwellenleitern in den thermoelastischen Zustand übergeht, diese aber noch vor Übergang des Röhrchenmaterials in den thermoplastischen Zustand den Übergang in den thermoelastischen Zustand vollziehen.

2. Verfahren nach Anspruch 1, wobei das Lichtwellenleiterbündel während oder nach dem Erhitzen verstreckt wird.

3. Verfahren nach mindestens einem der Ansprüche 1 bis 2, wobei der Schrumpfschlauch in der Mitte stärker erhitzt wird als an den Enden.

4. Verfahren nach mindestens einem der Ansprüche 1 bis 3, wobei der Brechungsindex des Kunststoffröhrchens kleiner ist als der Brechungsindex der Kernfaser.

5. Verfahren nach mindestens einem der Ansprüche 1 bis 4, wobei die Lichtwellenleiter an der Verbindungsstelle frei von Mantelmaterial sind und das Kunststoffröhrchen als optischer Mantel für den Mischbereich des Kopplers dient.

6. Verfahren nach Anspruch 5 wobei, das Kunststoffröhrchen auf der Innenseite verspiegelt ist.

7. Verfahren nach Anspruch 6, wobei das Kunststoffröhrchen zusätzlich mit einer verspiegelten Kunststoffolie umwickelt ist.

8. Verfahren nach mindestens einem der Ansprüche 1 bis 7, wobei die Länge des Kunststoffröhrchens im Bereich von 10 bis 100 mm, vorzugsweise im Bereich von 40 bis 60 mm, liegt.

9. Verfahren nach mindestens einem der Ansprüche 1 bis 8, wobei der Innendurchmesser des Kunststoffröhrchens im Bereich von 1 bis 50 mm, vorzugsweise im Bereich von 3 bis 10 mm, liegt.

10. Verfahren nach mindestens einem der Ansprüche 1 bis 9, wobei das Kunststoffröhrchen eine Wandstärke im Bereich von 0,5 bis 5 mm, vorzugsweise im Bereich von 1 bis 2 mm, besitzt.

## Claims

1. A process for producing an optical coupler for polymer optical waveguides, in which process two to 10⁵ polymer optical waveguides are arranged in the same sense and bundled, a plastic tube is put over the mixing region to be produced, then a piece of plastic shrink-on sleeve is pushed over the plastic tube and the shrink-on tube is heated to a temperature at which it contracts and the polymer optical waveguides and the plastic tube melt, wherein the materials of the polymer optical waveguides and of the plastic tube are selected in such a way that, as the temperature increases, the plastic tube converts to the thermoelastic state before the polymer optical waveguides, but the latter still complete the transition to the thermoelastic state before the transition of the tube material to the thermoplastic state.

2. The process as claimed in claim 1, wherein the optical waveguide bundle is stretched during or after heating.

3. The process as claimed in at least one of claims 1 to 2, wherein the shrink-on sleeve is heated more strongly in the center than at the ends.

4. The process as claimed in at least one of claims 1 to 3, wherein the refractive index of the plastic tube is less than the refractive index of the core fiber.

5. The process as claimed in at least one of claims 1 to 4, wherein the optical waveguides are free of cladding material at the joint and the plastic tube serves as optical cladding for the mixing region of the coupler.

6. The process as claimed in claim 5, wherein the plastic tube is mirror-coated on the inside.

7. The process as claimed in claim 6, wherein the plastic tube is additionally wrapped in a mirror-coated plastic film.

8. The process as claimed in at least one of claims 1 to 7, wherein the length of the plastic tube is in the range from 10 to 100 mm, preferably in the range from 40 to 60 mm.

9. The process as claimed in at least one of claims 1 to 8, wherein the internal diameter of the plastic tube is in the range from 1 to 50 mm, preferably in the range from 3 to 10 mm.

10. The process as claimed in at least one of claims 1 to 9, wherein the plastic tube has a wall thickness in the range from 0.5 to 5 mm, preferably in the range from 1 to 2 mm.

## Revendications

1. Procédé pour fabriquer un coupleur optique pour des guides d'ondes lumineuses formés d'un polymère, selon lequel on dispose dans le même sens et on réunit de deux jusqu'à 10⁵ guides d'ondes lumineuses formées d'un polymère, on emmanche un petit tube en matière plastique par-dessus la zone de mélange devant être formée, puis on emmanche un morceau de tuyau rétractable en matière plastique par-dessus le petit tube de matière plastique et on chauffe le tuyau rétractable jusqu'à une température, à laquelle il se contracte et les guides d'ondes lumineuses formés d'un polymère et le petit tube en matière plastique fondent, et selon lequel les matériaux des guides d'ondes lumineuses formés d'un polymère et du petit tube en matière plastique sont choisis de telle sorte que, lorsque la température augmente, le petit tube en matière plastique passe à l'état thermoplastique avant les guides d'ondes lumineuses formés du polymère, mais que ces derniers passent à l'état thermoélastique encore avant que le matériau du petit tube passe à l'état thermoplastique.

2. Procédé selon la revendication 1, selon lequel on étire le faisceau de guide d'ondes lumineuses pendant ou après le chauffage.

3. Procédé selon au moins l'une des revendications 1 et 2, selon lequel on chauffe le tuyau rétractable plus fortement en son centre qu'aux extrémités.

4. Procédé selon au moins l'une des revendications 1 à 3, selon lequel l'indice de réfraction du petit tube en matière plastique est inférieur à l'indice de réfraction des fibres du noyau.

5. Procédé selon au moins l'une des revendications 1 à 4, selon lequel les guides d'ondes lumineuses ne comportent aucun matériau enveloppe au niveau de la zone de jonction et que le petit tube en matière plastique est utilisé comme gaine optique pour la zone de mélange du coupleur.

6. Procédé selon la revendication 5, selon lequel on métallise la face intérieure du petit tube en matière plastique.

7. Procédé selon la revendication 6, selon lequel on enroule en supplément une feuille de matière plastique métallisée autour du petit tube en matière plastique.

8. Procédé selon au moins l'une des revendications 1 à 7, selon lequel la longueur du petit tube en matière plastique se situe dans la gamme allant de 10 à 100 mm et de préférence dans la gamme de 40 à 60 mm.

9. Procédé selon au moins l'une des revendications 1 à 8, selon lequel le diamètre intérieur du petit tube en matière plastique se situe dans la gamme de 1 à 50 mm et de préférence dans la gamme de 3 à 10 mm.

10. Procédé selon au moins l'une des revendications 1 à 9, selon lequel le petit tube en matière plastique possède une épaisseur de paroi dans la gamme de 0,5 à 5 mm et de préférence dans la gamme de 1 à 2 mm.
